# EUROPEAN PATENT SPECIFICATION

(11) **EP 4 560 196 B1**
(45) Date of publication and mention of the grant of the patent: **02.09.2026**
(21) Application number: 23865135.0
(22) Date of filing: 07.08.2023
(51) Int. Cl.: F23R 3/28, B05B 7/04, B05B 7/10, F02C 3/24, F02C 7/00, F02C 7/232

(54) **AIRCRAFT ENGINE COMBUSTOR**
FLUGZEUGMOTORBRENNKAMMER
CHAMBRE DE COMBUSTION DE MOTEUR D'AÉRONEF

(30) Priority: 16.09.2022 JP 2022148167
(43) Date of publication of application: 28.05.2025
(73) Proprietor: Mitsubishi Heavy Industries Aero Engines, Ltd., Komaki-shi, Aichi 485-0826, (JP)
(72) Inventor: IKEDA, Yutaka, Komaki-shi, Aichi 485-0826 (JP); FUJIMOTO, Yohei, Komaki-shi, Aichi 485-0826 (JP)
(74) Representative: Studio Torta S.p.A.
(86) International application number: PCT/JP2023/028748
(87) International publication number: WO 2024/057775

(56) References cited:
- WO-A1-2019/094817
- WO-A1-2020/049861
- JP-A- 2004 085 123
- JP-A- 2005 106 411
- JP-A- 2005 106 411
- JP-A- 2005 207 634
- JP-A- 2009 250 240
- JP-A- 2009 274 065
- US-A- 4 842 197
- US-A1- 2009 283 611
- US-A1- 2011 271 680

## Description

### Technical Field

The present disclosure relates to an aircraft engine combustor.

The present application claims priority based on Japanese Patent Application No. 2022-148167 filed in Japan on September 16, 2022.

### Background Art

An aircraft engine combustor (a combustor of an aircraft engine mounted on an aircraft) may be configured to atomize liquid fuel with combustion air. For example, PTL 1 discloses that a lip portion disposed at a distal end of a flow passage through which combustion air and liquid fuel flow includes a surface having a wettability and a surface having a non-wettability, which are alternately disposed.

### Citation List

### Patent Literature

[PTL 1] Japanese Unexamined Patent Application Publication No. 2009-274065
[PTL 2] US 2011/271680 A1
[PTL 3] JP 2005 106411 A

### Summary of Invention

### Technical Problem

In the technique disclosed in PTL 1, in a case where the flow velocity of the combustion air is high, the hydrodynamic instability can be sufficiently imparted to the liquid film formed on the lip portion to form liquid droplets having a small particle diameter. However, in a case where the flow velocity of the combustion air is slow, the liquid reservoir having a thickness greater than that of the liquid film is likely to be formed in the lip portion. Therefore, in a case where the hydrodynamic instability is sufficiently imparted to the liquid reservoir, liquid droplets having a large particle diameter are formed, which may reduce the atomization performance of the liquid fuel.

The present disclosure has been made in view of the above-described problems, and has an object to provide an aircraft engine combustor that can improve the atomization performance of liquid fuel when the flow velocity of combustion air is slow.

### Solution to Problem

In order to achieve the above object, according to the present invention, there is provided an aircraft engine combustor including a tubular member that has a tubular shape and defines an internal space extending along an axis; and a fuel nozzle that is disposed such that at least a portion of the fuel nozzle is located within the internal space, the fuel nozzle having a jetting hole from which liquid fuel is jetted toward an inner peripheral surface of the tubular member, in which the tubular member is configured such that an entire distal end surface in a circumferential direction extending from an outlet end of the inner peripheral surface toward an outside in a radial direction includes a lipophilic region having a first contact angle smaller than 90 degrees with respect to the liquid fuel.

### Advantageous Effects of Invention

According to the aircraft engine combustor of the present disclosure, it is possible to improve the atomization performance of the liquid fuel in a case where the flow velocity of the combustion air is slow.

### Brief Description of Drawings

Fig. 1 is a diagram schematically showing a configuration of an aircraft engine combustor according to an embodiment.
Fig. 2 is a diagram showing a distal end surface of a tubular member according to the embodiment as viewed from one side in an axial direction.
Fig. 3 is a diagram in which a part of the distal end surface of Fig. 2 is enlarged.
Fig. 4 is a diagram in which a part of the outlet end portion of Fig. 1 is enlarged.
Fig. 5 is a diagram showing an action and an effect of the aircraft engine combustor according to the embodiment.
Fig. 6 is a diagram schematically showing configurations of the aircraft engine combustor 1 in some embodiments.
Fig. 7 is a diagram in which a part of a second distal end surface of Fig. 6 is enlarged.
Fig. 8 is a diagram in which a part of a second outlet end portion of Fig. 6 is enlarged.

### Description of Embodiments

Hereinafter, an aircraft engine combustor according to an embodiment of the present disclosure will be described with reference to the drawings. Such embodiments show one aspect of the present disclosure, do not limit this disclosure, and can be optionally changed within the scope of the technical concept of the present disclosure.

### (Configuration)

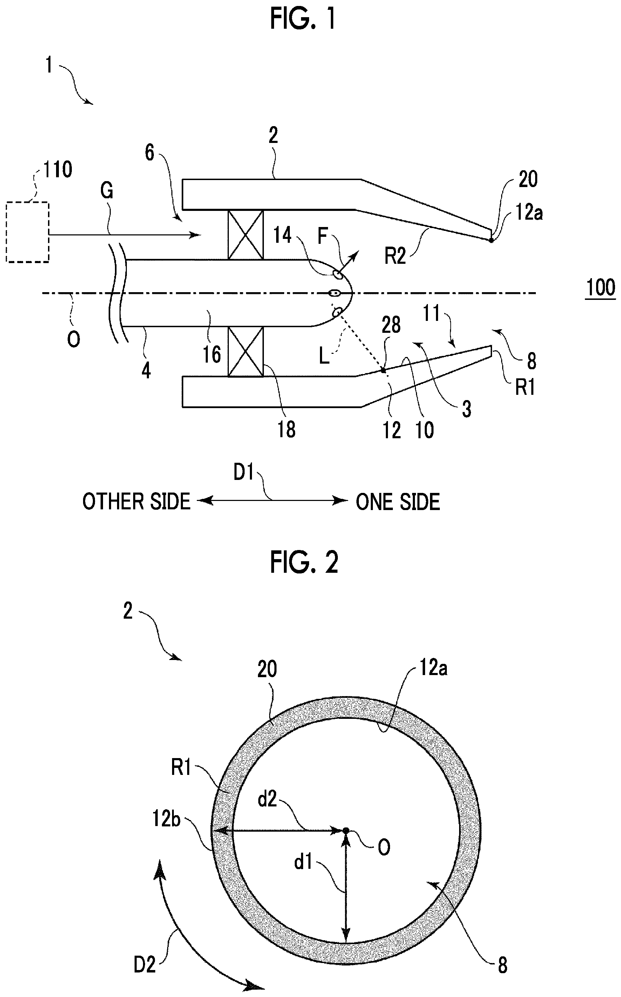

An aircraft engine combustor 1 according to the present disclosure is provided in an aircraft engine mounted on an aircraft, and mixes and combusts compressed air G (combustion air) supplied from a compressor 110 provided in the aircraft engine and liquid fuel F. Fig. 1 is a diagram schematically showing a configuration of the aircraft engine combustor 1 according to an embodiment. As shown in Fig. 1 as an example, the aircraft engine combustor 1 includes a tubular member 2 and a fuel nozzle 4.

The tubular member 2 has a tubular shape and defines an internal space 3 extending along the axis O. In the embodiment, as shown in Fig. 1 as an example, the tubular member 2 is open at both ends, and one end of the tubular member 2 is formed with an inlet 6 of the internal space 3 for allowing the compressed air G supplied from the compressor 110 to flow into. The other end of the tubular member 2 is formed with an outlet 8 of the internal space 3 for allowing the compressed air G to flow out together with the liquid fuel F to a combustion space 100.

Hereinafter, a direction in which the axis O extends is defined as an axial direction D1, a direction from the inlet 6 to the outlet 8 of the internal space 3 is defined as one side of the axial direction D1, and a direction opposite to the one side of the axial direction D1 is defined as the other side of the axial direction D1.

In the embodiment, as shown in Fig. 1 as an example, the tubular member 2 includes a reduced diameter portion 12 in which an inner peripheral surface 10 approaches the axis O toward one side in the axial direction D1. The reduced diameter portion 12 is formed in one end portion of the tubular member 2 on one side in the axial direction D1 and forms the outlet 8 of the internal space 3. The tubular member 2 includes a distal end surface 20 (lip) that extends from the outlet end 12a of the inner peripheral surface 10 of the reduced diameter portion 12 toward the outside in the radial direction about the axis O. In other words, the distal end surface 20 extends from the outlet end 12a away from the axis O. The specific configuration of the distal end surface 20 will be described below.

The fuel nozzle 4 extends along the axial direction D1. The fuel nozzle 4 is disposed such that a distal end portion 16 on one side in the axial direction D1 is located within the internal space 3. The fuel nozzle 4 is formed at the distal end portion 16 and has a jetting hole 14 for jetting the liquid fuel F. The jetting hole 14 is configured to jet the liquid fuel F toward the inner peripheral surface 10 of the reduced diameter portion 12 of the tubular member 2.

In the embodiment, as shown in Fig. 1 as an example, the jetting hole 14 is positioned on the other side in the axial direction D1 with respect to the reduced diameter portion 12 of the tubular member 2. The jetting hole 14 faces the inner peripheral surface 10 of the reduced diameter portion 12. In other words, the virtual straight line L orthogonal to the jetting hole 14 passes through the inner peripheral surface 10 of the reduced diameter portion 12. In addition, a plurality of jetting holes 14 may be formed in the distal end portion 16 of the fuel nozzle 4.

In the embodiment, as shown in Fig. 1 as an example, the aircraft engine combustor 1 further includes a swirler 18 provided around the distal end portion 16 of the fuel nozzle 4. The swirler 18 is positioned on the other side in the axial direction D1 with respect to the jetting hole 14. The swirler 18 imparts a swirling flow to the compressed air G flowing through the internal space 3 to form a vortex in the combustion space 100 and recirculates the high-temperature combustion gas, thereby stabilizing the flame.

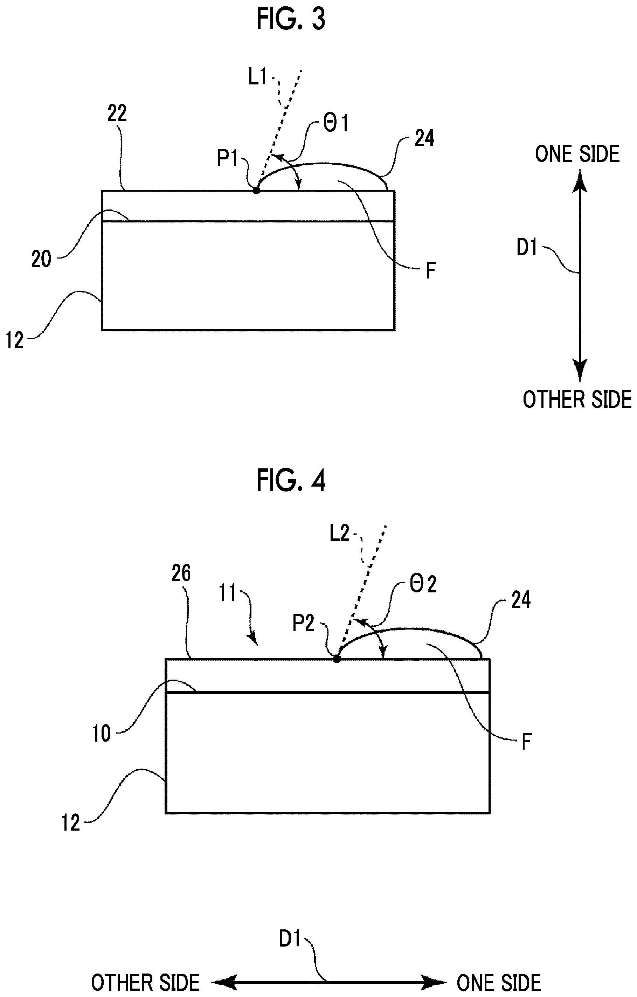

Fig. 2 is a diagram showing a distal end surface 20 of the tubular member 2 according to the embodiment as viewed from one side in the axial direction D1. Fig. 3 is a diagram in which a part of the distal end surface 20 of Fig. 2 is enlarged.

In the embodiment, as shown in Fig. 2 as an example, the distal end surface 20 of the tubular member 2 has a ring shape, and the outlet 8 of the internal space 3 has a circular shape. The entire distal end surface 20 in the circumferential direction D2 about the axis O includes the first lipophilic region R1. The first lipophilic region R1 is configured to have a first contact angle θ1 smaller than 90 degrees with respect to the liquid fuel F.

The first lipophilic region R1 includes a boundary between the distal end surface 20 and the inner peripheral surface 10 (an outlet end 12a of the inner peripheral surface 10). In a case where a distance from the axis O to the outlet end 12a of the inner peripheral surface 10 is defined as d1, and a distance from the axis O to one end 12b of the first lipophilic region R1 that is outermost in the radial direction is defined as d2, d2 < 1.2 × d1 is satisfied.

In the embodiment, as shown in Fig. 3 as an example, the distal end surface 20 is coated with a first lipophilic film 22 that modifies the surface free energy of the distal end surface 20. The first lipophilic film 22 is formed by, for example, glass coating or photocatalytic titanium oxide coating. The distal end surface 20 is coated with the first lipophilic film 22 to include the first lipophilic region R1.

As shown in Fig. 3 as an example, in a state where the liquid fuel F is attached to the first lipophilic film 22, a first tangent line of the surface 24 of the liquid fuel F that passes through the first point P1 at which the surface 24 of the liquid fuel F is in contact with the first lipophilic film 22 is defined as L1. The first contact angle θ1 is an angle on the side where the liquid fuel F is present among the angles formed by the first tangent line L1 and the first lipophilic film 22. The first contact angle θ1 is smaller than 90 degrees. In some embodiments, the first contact angle θ1 is 45 degrees or less. In some embodiments, the first contact angle θ1 is 10 degrees or less.

In the embodiment, as shown in Fig. 1 as an example, an outlet end portion 11 (prefilmer) of the inner peripheral surface 10 including the outlet end 12a includes the second lipophilic region R2. More specifically, the entire outlet end portion 11 of the inner peripheral surface 10 in the circumferential direction D2 includes the second lipophilic region R2. The second lipophilic region R2 is configured to have a second contact angle θ2 smaller than 90 degrees with respect to the liquid fuel F.

The second lipophilic region R2 includes a passing point 28 through which the virtual straight line L passes on the inner peripheral surface 10. The second lipophilic region R2 continuously extends from the passing point 28 to the outlet end 12a of the inner peripheral surface 10.

Fig. 4 is a diagram in which a part of the outlet end portion 11 of Fig. 1 is enlarged. In the embodiment, as shown in Fig. 4 as an example, the outlet end portion 11 of the inner peripheral surface 10 is coated with a second lipophilic film 26 that modifies the surface free energy of the outlet end portion 11. The second lipophilic film 26 is formed by, for example, glass coating or photocatalytic titanium oxide coating. The outlet end portion 11 is coated with the second lipophilic film 26 to include the second lipophilic region R2.

As shown in Fig. 4 as an example, in a state where the liquid fuel F is attached to the second lipophilic film 26, a second tangent line of the surface 24 of the liquid fuel F that passes through the second point P2 at which the surface 24 of the liquid fuel F is in contact with the second lipophilic film 26 is defined as L2. The second contact angle θ2 is an angle on the side where the liquid fuel F is present among the angles formed by the second tangent line L2 and the second lipophilic film 26. The second contact angle θ2 is smaller than 90 degrees. In the embodiment, the second contact angle θ2 is equal to the first contact angle θ1.

### (Actions and Effects)

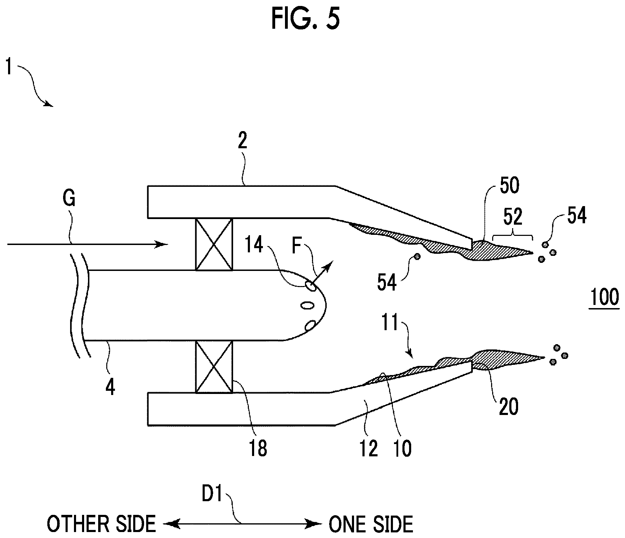

The action and effect of the aircraft engine combustor 1 according to the embodiment will be described. Fig. 5 is a diagram showing the action and the effect of the aircraft engine combustor 1 according to the embodiment. During the operation of the aircraft engine combustor 1, a part of the liquid fuel F jetted from the jetting hole 14 of the fuel nozzle 4 collides with and adheres to the inner peripheral surface 10 of the reduced diameter portion 12. Then, a part F of the liquid fuel F is moved on the inner peripheral surface 10 to one side in the axial direction D1 by the compressed air G and is transported to the distal end surface 20 of the tubular member 2. Then, a part of the liquid fuel F transported to the distal end surface 20 is atomized (liquid droplets 54 having a small particle diameter are formed) by imparting hydrodynamic instability such as Rayleigh-Taylor instability or Plateau-Rayleigh instability.

In a case where the flow velocity of the compressed air G is slow as in the idle operation of the aircraft engine combustor 1, the difference between the inertial force of the liquid fuel F and the surface tension on the distal end surface 20 is small (the Weber number is low), and a liquid reservoir 50 of the liquid fuel F is formed. According to the embodiment, since the entire distal end surface 20 of the circumferential direction D2 is configured to have the first contact angle θ1, the interface tension with respect to the liquid fuel F is increased in the entire distal end surface 20 of the circumferential direction D2. Therefore, since the liquid reservoir 50 is likely to be held on the distal end surface 20, it is possible to lengthen the liquid thread 52 (ligament) extending from the liquid reservoir 50 to one side (combustion space 100 side) in the axial direction D1. As the liquid thread 52 is lengthened, the liquid thread 52 is likely to be affected by the compressed air G and the above-described hydrodynamic instability is likely to be imparted, so that the atomization of the liquid fuel F is promoted. Therefore, it is possible to improve the atomization performance of the liquid fuel F in the case where the flow velocity of the compressed air G is slow.

According to the embodiment, since the outlet end portion 11 is configured to have the second contact angle θ2, the liquid fuel F adhering to the outlet end portion 11 can be made thin, and liquid droplets 54 having a small particle diameter can be formed from the thin film of the liquid fuel F. Therefore, it is possible to promote the atomization of the liquid fuel F.

In the embodiment, the first contact angle θ1 is equal to the second contact angle θ2, but the present disclosure is not limited to this embodiment. The first contact angle θ1 and the second contact angle θ2 may be different from each other. In some embodiments, the first contact angle θ1 is smaller than the second contact angle θ2. With such a configuration, since the liquid fuel F is energetically stabilized on the distal end surface 20 with respect to the outlet end portion 11, the liquid reservoir 50 generated on the outlet end portion 11 is smaller, the liquid thread 52 (ligament) generated on the distal end surface 20 is longer, and the atomization of the liquid fuel F can be further promoted as compared with a case where the first contact angle θ1 and the second contact angle θ2 are equal to each other.

In the embodiment, the distal end surface 20 has the first contact angle θ1 by coating the distal end surface 20 with the first lipophilic film 22, but the present disclosure is not limited to this embodiment. Although not shown, in some embodiments, the distal end surface 20 has the first contact angle θ1 by forming unevenness on the distal end surface 20. The unevenness of the distal end surface 20 is formed by, for example, shot blasting or laser processing.

In the embodiment, the outlet end portion 11 has the second contact angle θ2 by coating the outlet end portion 11 with the second lipophilic film 26, but the present disclosure is not limited to this embodiment. Although not shown, in some embodiments, the outlet end portion 11 has a second contact angle θ2 by forming unevenness on the outlet end portion 11. The unevenness of the outlet end portion 11 is formed by, for example, shot blasting or laser processing.

Although not shown, in some embodiments, the aircraft engine combustor 1 further includes an outer tubular member that has tubular shape and surrounds the tubular member 2 from the outside in the radial direction. A secondary air flow passage through which the compressed air G flows as secondary air is formed between the tubular member 2 and the outer tubular member. The aircraft engine combustor 1 is configured such that liquid fuel F is mixed with the compressed air G (primary air) in the tubular member 2 and combusted in the combustion space 100, and then mixed with the compressed air G (secondary air) flowing out from the outer tubular member and combusted.

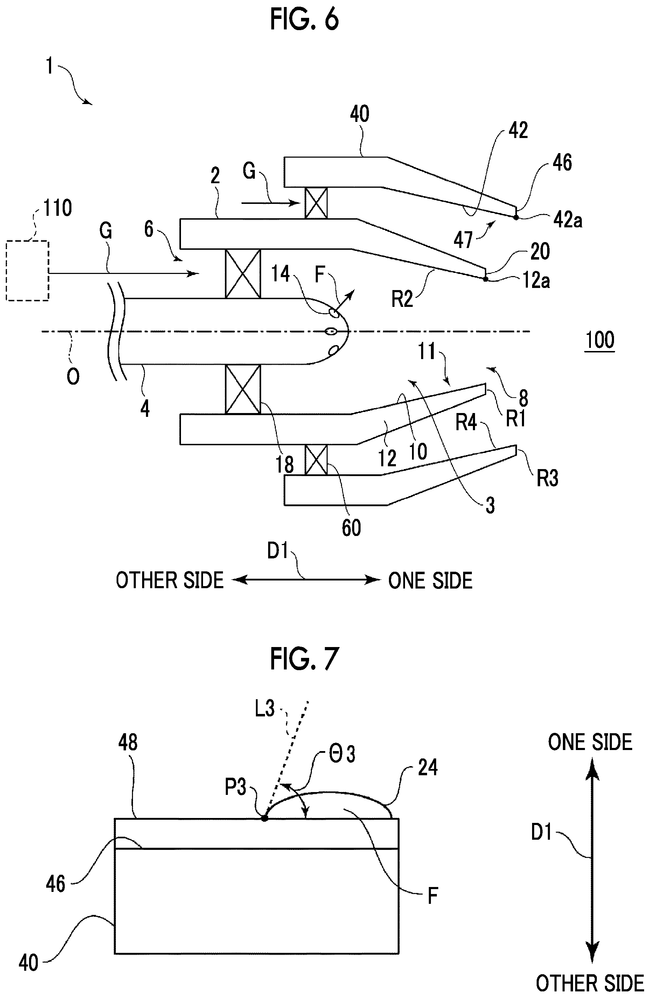

Fig. 6 is a diagram schematically showing a configuration of the aircraft engine combustor 1 according to some embodiments. Fig. 7 is a diagram in which a part of the second distal end surface 46 in Fig. 6 is enlarged. In some embodiments, as shown in Fig. 6 as an example, the aircraft engine combustor 1 further includes a second tubular member 40 that has tubular shape and surrounds the outlet end 12a of the inner peripheral surface 10 from the outside in the radial direction.

The second tubular member 40 has a second inner peripheral surface 42 including a second outlet end 42a that is located on a side opposite to the internal space 3 side across the outlet end 12a of the inner peripheral surface 10 in the axial direction D1. That is, the second outlet end 42a is closer to the combustion space 100 than the outlet end 12a. The second tubular member 40 includes a second distal end surface 46 that extends from the second outlet end 42a of the second inner peripheral surface 42 toward the outside in the radial direction. The entire second distal end surface 46 in the circumferential direction D2 includes the third lipophilic region R3. The third lipophilic region R3 is configured to have a third contact angle θ3 smaller than 90 degrees with respect to the liquid fuel F. The third lipophilic region R3 includes a boundary (the second outlet end 42a of the second inner peripheral surface 42) between the second distal end surface 46 and the second inner peripheral surface 42.

In the embodiment shown in Fig. 6 as an example, the aircraft engine combustor 1 further includes an outer swirler 60 provided between the second tubular member 40 and the tubular member 2. The outer swirler 60 is positioned on one side in the axial direction D1 with respect to the swirler 18. The outer swirler 60 imparts a swirling flow to the compressed air G that flows between the second tubular member 40 and the tubular member 2. Therefore, as in the above-described swirler 18, the flame is stabilized by forming a vortex in the combustion space 100 and recirculating the high-temperature combustion gas. In addition, the atomization of the liquid fuel F is promoted by a shearing layer generated between the swirling flow formed by the outer swirler 60 and the swirling flow formed by the swirler 18. Therefore, the liquid droplets 54 having a small particle diameter are formed, and the mixing of the compressed air G and the liquid fuel F is promoted.

In some embodiments, as shown in Fig. 7 as an example, the second distal end surface 46 is coated with the third lipophilic film 48 that modifies the surface free energy of the second distal end surface 46, and the second distal end surface 46 is coated with the third lipophilic film 48 to include the third lipophilic region R3.

As shown in Fig. 7 as an example, in a state where the liquid fuel F is attached to the third lipophilic film 48, a third tangent line of the surface 24 of the liquid fuel F that passes through the third point P3 at which the surface 24 of the liquid fuel F is in contact with the third lipophilic film 48 is defined as L3. The third contact angle θ3 is an angle on the side where the liquid fuel F is present among the angles formed by the third tangent line L3 and the third lipophilic film 48. The third contact angle θ3 is smaller than 90 degrees. In some embodiments, the third contact angle θ3 is 45 degrees or less. In some embodiments, the third contact angle θ3 is 10 degrees or less.

With the configuration described with reference to Figs. 6 and 7, the interface tension with respect to the liquid fuel F is increased in the entire second distal end surface 46 in the circumferential direction D2. Therefore, the liquid reservoir 50 is likely to be held on the second distal end surface 46. Therefore, the liquid thread 52 (ligament) on the second distal end surface 46 is lengthened, and the atomization of the liquid fuel F is promoted. Therefore, it is possible to improve the atomization performance of the liquid fuel F in the case where the flow velocity of the compressed air G is slow.

In some embodiments, the third contact angle θ3 is smaller than the first contact angle θ1. With such a configuration, the second distal end surface 46 can make the liquid thread longer than the distal end surface 20. Since the second distal end surface 46 is closer to the combustion space 100 than the distal end surface 20, the liquid fuel F can be effectively atomized.

In some embodiments, as shown in Fig. 6 as an example, a second outlet end portion 47 of the second inner peripheral surface 42 including the second outlet end 42a includes the fourth lipophilic region R4. The second outlet end portion 47 is positioned on one side in the axial direction D1 with respect to the distal end surface 20. An entire second outlet end portion 47 in the circumferential direction D2 includes the fourth lipophilic region R4. The fourth lipophilic region R4 is configured to have a fourth contact angle θ4 smaller than 90 degrees with respect to the liquid fuel F.

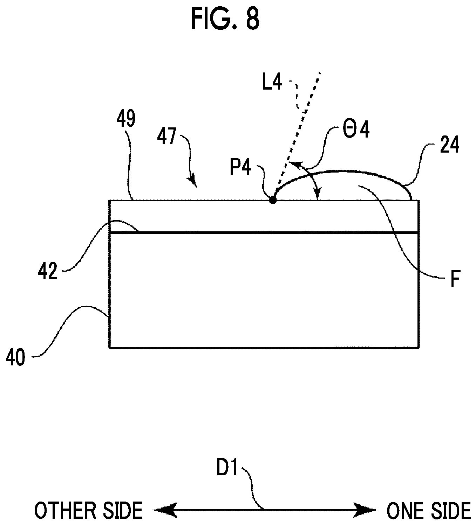

Fig. 8 is a diagram in which a part of the second outlet end portion 47 in Fig. 6 is enlarged. In some embodiments, as shown in Fig. 8 as an example, the second outlet end portion 47 of the second inner peripheral surface 42 is coated with a fourth lipophilic film 49 that modifies the surface free energy of the second outlet end portion 47. The fourth lipophilic film 49 is formed by, for example, glass coating or photocatalytic titanium oxide coating. The second outlet end portion 47 is coated with the fourth lipophilic film 49 to include the fourth lipophilic region R4.

As shown in Fig. 8 as an example, in a state where the liquid fuel F is attached to the fourth lipophilic film 49, a fourth tangent line of the surface 24 of the liquid fuel F that passes through the fourth point P4 at which the surface 24 of the liquid fuel F is in contact with the fourth lipophilic film 49 is defined as L4. The fourth contact angle θ4 is an angle on the side where the liquid fuel F is present among the angles formed by the fourth tangent line L4 and the fourth lipophilic film 49. The fourth contact angle θ4 is smaller than 90 degrees. In the embodiment shown in Fig. 8 as an example, the fourth contact angle θ4 is equal to the third contact angle θ3.

With the configuration described above with reference to Figs. 6 and 8, since the second outlet end portion 47 is configured to have the fourth contact angle θ4, the liquid fuel F adhering to the second outlet end portion 47 can be made thin, and liquid droplets 54 having a small particle diameter can be formed from the thin film of the liquid fuel F. Therefore, it is possible to promote the atomization of the liquid fuel F.

In the embodiment shown in Fig. 8 as an example, the third contact angle θ3 is equal to the fourth contact angle θ4, but the present disclosure is not limited to this embodiment. The third contact angle θ3 and the fourth contact angle θ4 may be different from each other. In some embodiments, the third contact angle θ3 is smaller than the fourth contact angle θ4. With such a configuration, since the liquid fuel F is energetically stabilized on the second distal end surface 46 with respect to the second outlet end portion 47, the liquid reservoir 50 generated on the second outlet end portion 47 is smaller, the liquid thread 52 (ligament) generated on the second distal end surface 46 is longer, and the atomization of the liquid fuel F can be further promoted as compared with a case where the third contact angle θ3 and the fourth contact angle θ4 are equal to each other.

Although not shown, in some embodiments, a fuel port from which the liquid fuel F is discharged is formed in the second inner peripheral surface 42. The fuel port is positioned between the distal end surface 20 and the outer swirler 60 in the axial direction D1. A part of the liquid fuel discharged from the fuel port is moved on the second inner peripheral surface 42 to one side in the axial direction D1 by the compressed air G and is transported to the second distal end surface 46.

For example, contents described in each of the above-described embodiments are understood as follows.
[1] An aircraft engine combustor (1) according to the present disclosure includes a tubular member (2) that has a tubular shape and defines an internal space (3) extending along an axis (O), and a fuel nozzle (4) that is disposed such that at least a portion (16) of the fuel nozzle is located within the internal space, the fuel nozzle (4) having a jetting hole (14) from which liquid fuel (F) is jetted toward an inner peripheral surface (10) of the tubular member, in which the tubular member is configured such that an entire distal end surface (20) in a circumferential direction (D2) extending from an outlet end (12a) of the inner peripheral surface toward an outside in a radial direction has a first contact angle (θ1) smaller than 90 degrees with respect to the liquid fuel.

In a case where the flow velocity of the combustion air is slow, the difference between the inertial force of the liquid fuel and the surface tension on the distal end surface is small, and a liquid reservoir of the liquid fuel is formed. According to the configuration described in [1], the interface tension with respect to the liquid fuel is increased in the entire distal end surface of the tubular member in circumferential direction. Therefore, the liquid reservoir of the liquid fuel formed on the distal end surface of the tubular member is likely to be held, so that it is possible to lengthen the liquid thread (ligament) extending from the liquid reservoir. As the liquid thread is lengthened, the liquid thread is likely to be affected by combustion air or the like, so that the atomization of the liquid fuel is promoted. Therefore, it is possible to improve the atomization performance of the liquid fuel in the case where the flow velocity of the combustion air is slow.

[2] In some embodiments, in the configuration described in [1], an outlet end portion (11) of the inner peripheral surface including the outlet end is configured to have a second contact angle (θ2) smaller than 90 degrees with respect to the liquid fuel.

According to the configuration described in [2], the liquid fuel adhering to the outlet end portion can be made thin, and liquid droplets having a small particle diameter can be formed from the thin film of liquid fuel. As a result, it is possible to promote the atomization of the liquid fuel.

[3] In some embodiments, in the configuration according to [2], the first contact angle is smaller than the second contact angle.

According to the configuration described in [3], the liquid fuel is energetically stabilized on the distal end surface with respect to the outlet end portion, so that the atomization of the liquid fuel can be further promoted by lengthening the liquid thread generated on the distal end surface.

[4] In some embodiments, in the configuration according to any one of [1] to [3], the aircraft engine combustor further includes a second tubular member (40) that has a tubular shape, surrounds the outlet end of the inner peripheral surface from the outside in the radial direction, and has a second inner peripheral surface (42) including a second outlet end (42a) positioned on a side opposite to an internal space side across the outlet end of the inner peripheral surface in a direction (D1) in which the axis extends, and the second tubular member is configured such that an entire second distal end surface (46) in the circumferential direction (D2) extending from the second outlet end of the second inner peripheral surface toward the outside in the radial direction has a third contact angle (θ3) smaller than 90 degrees with respect to the liquid fuel.

According to the configuration described in [4], the interface tension with respect to the liquid fuel can be increased even in the entire second distal end surface in the circumferential direction, and the liquid thread extending from the liquid reservoir of the second distal end surface can be lengthened. Therefore, the liquid thread is likely to be affected by the combustion air or the like, and thus it is possible to promote the atomization of the liquid fuel.

[5] In some embodiments, in the configuration described in [4], a second outlet end portion (47) of the second inner peripheral surface including the second outlet end is configured to have a fourth contact angle (θ4) smaller than 90 degrees with respect to the liquid fuel.

According to the configuration described in [5], the liquid fuel adhering to the second outlet end portion can be made thin, and liquid droplets having a small particle diameter can be formed from the thin film of liquid fuel. As a result, it is possible to promote the atomization of the liquid fuel.

[6] In some of the embodiments, in the configuration according to [4] or [5], the third contact angle is smaller than the first contact angle.

According to the configuration described in [6], the second distal end surface can make the liquid thread longer than the distal end surface. Since the second distal end surface is closer to the combustion space where the liquid fuel is combusted than the distal end surface, the liquid fuel can be effectively atomized.

### Reference Signs List

1: aircraft engine combustor
2: tubular member
3: internal space
4: fuel nozzle
10: inner peripheral surface
11: outlet end portion
12a: outlet end
14: jetting hole
16: distal end portion
20: distal end surface
40: second tubular member
42: second inner peripheral surface
42a: second outlet end
46: second distal end surface
47: second outlet end portion
52: liquid thread
54: liquid droplet
D1: axial direction
D2: circumferential direction
F: liquid fuel
G: compressed air
O: axis
R1: first lipophilic region
R2: second lipophilic region
R3: third lipophilic region
R4: fourth lipophilic region

## Claims

1. An aircraft engine combustor (1) comprising:
a tubular member (2) that has a tubular shape and defines an internal space (3) extending along an axis (O); and
a fuel nozzle (4) that is disposed such that at least a portion of the fuel nozzle (4) is located within the internal space (3), the fuel nozzle (4) having a jetting hole (14) from which liquid fuel is jetted toward an inner peripheral surface (10) of the tubular member (3),
**characterized in that** the tubular member (3) is configured such that an entire distal end surface (20) in a circumferential direction extending from an outlet end (12a) of the inner peripheral surface (10) toward an outside in a radial direction includes a lipophilic region (R1,R2,R3,R4) having a first contact angle smaller than 90 degrees with respect to the liquid fuel.

2. The aircraft engine combustor (1) according to claim 1,
wherein an outlet end portion (11) of the inner peripheral surface (20) including the outlet end (12a) is configured to have a second contact angle smaller than 90 degrees with respect to the liquid fuel.

3. The aircraft engine combustor (1) according to claim 2,
wherein the first contact angle is smaller than the second contact angle.

4. The aircraft engine combustor (1) according to any one of claims 1 to 3, further comprising:
a second tubular member (40) that has a tubular shape, surrounds the outlet end (12a) of the inner peripheral surface (20) from the outside in the radial direction, and has a second inner peripheral surface (42) including a second outlet end (42a) positioned on a side opposite to an internal space side across the outlet end of the inner peripheral surface in a direction in which the axis extends,
wherein the second tubular member (42) is configured such that an entire second distal end surface (46) in the circumferential direction extending from the second outlet end (42a) of the second inner peripheral surface (42) toward the outside in the radial direction has a third contact angle smaller than 90 degrees with respect to the liquid fuel.

5. The aircraft engine combustor (1) according to claim 4,
wherein a second outlet end portion of the second inner peripheral surface including the second outlet end (42a) is configured to have a fourth contact angle smaller than 90 degrees with the liquid fuel.

6. The aircraft engine combustor (1) according to claim 4 or 5,
wherein the third contact angle is smaller than the first contact angle.

## Patentansprüche

1. Flugzeugtriebwerksbrennkammer (1), umfassend:
ein rohrförmiges Element (2), das eine rohrartige Form aufweist und einen Innenraum (3) begrenzt, der sich entlang einer Achse (O) erstreckt; und
eine Kraftstoffdüse (4), die derart angeordnet ist, dass sich mindestens ein Abschnitt der Kraftstoffdüse (4) innerhalb des Innenraums (3) befindet, wobei die Kraftstoffdüse (4) eine Spritzöffnung (14) aufweist, aus der flüssiger Kraftstoff in Richtung einer inneren Umfangsfläche (10) des rohrförmigen Elements (3) versprüht wird,
**dadurch gekennzeichnet, dass** das rohrförmige Element (3) derart konfiguriert ist, dass eine gesamte distale Endfläche (20), die sich in Umfangsrichtung von einem Auslassende (12a) der inneren Umfangsfläche (10) in radialer Richtung nach außen erstreckt, einen lipophilen Bereich (R1, R2, R3, R4) aufweist, der einen ersten Kontaktwinkel gegenüber dem flüssigen Brennstoff kleiner als 90 Grad aufweist.

2. Flugzeugtriebwerksbrennkammer (1) nach Anspruch 1,
wobei ein Auslassendabschnitt (11) der Innenumfangsfläche (20), der das Auslassende (12a) umfasst, so ausgebildet ist, dass er in Bezug auf den flüssigen Brennstoff einen zweiten Kontaktwinkel von weniger als 90 Grad aufweist.

3. Flugzeugtriebwerksbrennkammer (1) nach Anspruch 2,
wobei der erste Kontaktwinkel kleiner als der zweite Kontaktwinkel ist.

4. Flugzeugtriebwerksbrennkammer (1) nach einem der Ansprüche 1 bis 3, ferner umfassend:
ein zweites rohrförmiges Element (40), das eine rohrartige Form aufweist, das Auslassende (12a) der inneren Umfangsfläche (20) in radialer Richtung von außen umgibt und eine zweite innere Umfangsfläche (42) aufweist, die ein zweites Auslassende (42a) einschließt, das auf einer Seite gegenüber der Seite des Innenraums positioniert ist, und zwar quer zum Auslassende der inneren Umfangsfläche in einer Richtung, in der sich die Achse erstreckt,
wobei das zweite rohrförmige Element (42) derart konfiguriert ist, dass eine gesamte zweite distale Endfläche (46), die sich in Umfangsrichtung vom zweiten Auslassende (42a) der zweiten inneren Umfangsfläche (42) nach außen in radialer Richtung erstreckt, einen dritten Kontaktwinkel von weniger als 90 Grad im Hinblick auf den flüssigen Brennstoff aufweist.

5. Flugzeugtriebwerksbrennkammer (1) nach Anspruch 4,
wobei ein zweiter Auslassendabschnitt der zweiten Innenumfangsfläche, der das zweite Auslassende (42a) einschließt, so konfiguriert ist, dass er einen vierten Kontaktwinkel mit dem flüssigen Kraftstoff aufweist, der kleiner als 90 Grad ist.

6. Flugzeugtriebwerksbrennkammer (1) nach Anspruch 4 oder 5, wobei der dritte Kontaktwinkel kleiner als der erste Kontaktwinkel ist.

## Revendications

1. Chambre de combustion de moteur d'aéronef (1), comprenant :
un élément tubulaire (2) qui présente une forme tubulaire et définit un espace interne (3) s'étendant le long d'un axe (O) ; et
une buse à carburant (4) qui est disposée de telle sorte qu'au moins une partie de la buse à carburant (4) se trouve à l'intérieur de l'espace interne (3), la buse à carburant (4) comportant un orifice d'éjection (14) à partir duquel du carburant liquide est projeté vers une surface périphérique interne (10) de l'élément tubulaire (3),
**caractérisé en ce que** l'élément tubulaire (3) est configuré de telle sorte que toute la surface d'extrémité distale (20), dans une direction circonférentielle s'étendant depuis une extrémité de sortie (12a) de la surface périphérique interne (10) vers l'extérieur dans une direction radiale, comprend une région lipophile (R1, R2, R3, R4) présentant un premier angle de contact inférieur à 90 degrés par rapport au carburant liquide.

2. Chambre de combustion de moteur d'aéronef (1) selon la revendication 1,
dans laquelle une partie d'extrémité de sortie (11) de la surface périphérique interne (20), comprenant l'extrémité de sortie (12a), est configurée de manière à présenter un deuxième angle de contact inférieur à 90 degrés par rapport au carburant liquide.

3. Chambre de combustion de moteur d'aéronef (1) selon la revendication 2,
dans laquelle le premier angle de contact est inférieur au second angle de contact.

4. Chambre de combustion de moteur d'aéronef (1) selon l'une quelconque des revendications 1 à 3, comprenant en outre :
un deuxième élément tubulaire (40), qui présente une forme tubulaire, entoure l'extrémité de sortie (12a) de la surface périphérique interne (20) depuis l'extérieur dans la direction radiale, et présente une deuxième surface périphérique interne (42) comprenant une deuxième extrémité de sortie (42a) positionnée d'un côté opposé à un côté espace interne, de part et d'autre de l'extrémité de sortie de la surface périphérique interne, dans la direction dans laquelle s'étend l'axe,
dans laquelle le deuxième élément tubulaire (42) est configuré de telle sorte que toute la surface de la deuxième extrémité distale (46), s'étendant dans la direction circonférentielle depuis la deuxième extrémité de sortie (42a) de la deuxième surface périphérique interne (42) vers l'extérieur dans la direction radiale, présente un troisième angle de contact inférieur à 90 degrés par rapport au carburant liquide.

5. La chambre de combustion de moteur d'aéronef (1) selon la revendication 4,
dans laquelle une deuxième partie d'extrémité de sortie de la deuxième surface périphérique interne, comprenant la deuxième extrémité de sortie (42a), est configurée pour présenter un quatrième angle de contact inférieur à 90 degrés avec le carburant liquide.

6. Chambre de combustion de moteur d'aéronef (1) selon la revendication 4 ou 5, dans laquelle le troisième angle de contact est inférieur au premier angle de contact.
